(19) Europäisches Patentamt
European Patent Office
Office européen des brevets

(11) **EP 2 768 116 A1**

## (12) EUROPEAN PATENT APPLICATION
published in accordance with Art. 153(4) EPC

(43) Date of publication:
**20.08.2014 Bulletin 2014/34**

(21) Application number: **11873904.4**

(22) Date of filing: **12.10.2011**

(51) Int Cl.:
*H02J 17/00* (2006.01)    *H02J 7/00* (2006.01)

(86) International application number:
**PCT/JP2011/073378**

(87) International publication number:
**WO 2013/054399 (18.04.2013 Gazette 2013/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **ICHIKAWA, Shinji**
**Toyota-shi**
**Aichi 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Bavariaring 10**
**80336 München (DE)**

(54) **POWER TRANSMITTING APPARATUS, POWER RECEIVING APPARATUS, AND POWER TRANSMITTING SYSTEM**

(57)    A resonant coil (316) transmits electric power to a power reception unit of a vehicle in a contactless manner. Each of a plurality of electromagnetic induction coils (310, 312, 314) is connected to a power supply unit through a power line, and capable of supplying electric power received from the power supply unit to the resonant coil in a contactless manner. A rail (320) is moving means for moving the resonant coil in a range in which electric power can be supplied from any one of the plurality of electromagnetic induction coils to the resonant coil. The resonant coil moves on the rail in accordance with the positional relation with the power reception unit of the vehicle.

FIG.2

**Description**

TECHNICAL FIELD

The present invention relates to a power transmission device, a power reception device and a power transfer system, and particularly to a contactless power transfer technique for transferring electric power from a power transmission device to a power reception device in a contactless manner.

BACKGROUND ART

Great attention has been paid to electrically powered vehicles such as an electric vehicle and a hybrid vehicle as environmentally-friendly vehicles. These vehicles each are mounted with an electric motor generating driving force for the vehicle to travel as well as a rechargeable power storage device storing electric power to be supplied to the electric motor. The hybrid vehicle may be a vehicle mounted with an internal combustion engine as a source of motive power in addition to the electric motor, and a vehicle mounted with a fuel cell as a source of direct-current (DC) electric power for driving the vehicle in addition to the power storage device.

It is known that some hybrid vehicles have a power storage device mounted on the vehicle and chargeable from a power supply external to the vehicle, like the electric vehicles. For example, a so-called "plug-in hybrid vehicle" is known that has a power storage device chargeable from a power supply external to the vehicle by connecting a power supply outlet provided at the house and a charging inlet provided at the vehicle by means of a charging cable.

Japanese Patent Laying-Open No. 2000-092727 (PTD 1) discloses a charging device for charging batteries of an electric vehicle, a plug-in hybrid vehicle and the like. According to this charging device, when it is detected that the vehicle is stopped, a power feeding coupler is moved by a manipulator to connect this power feeding coupler to a charging coupler of the electric vehicle. The manipulator has a base provided with a moving up and down mechanism such that this mechanism can be moved up and down. This moving up and down mechanism is provided with a horizontal first arm so as to be pivotable at one end. Furthermore, the first arm is provided at its end with a horizontal second arm so as to be pivotable at one end. The second arm is provided at its end with the power feeding coupler. Such a configuration allows smooth connection between the charging coupler and the power feeding coupler (see PTD 1).

On the other hand, attention has been recently directed to contactless power transfer as a power transfer method, by which a power supply cord and a power cable are not used. Three techniques are known as this contactless power transfer technique, namely power transmission by means of electromagnetic induction, power transmission by means of microwaves and so-called resonance-type power transmission. Among these techniques, resonance-type power transmission is used for power transmission in a contactless manner through an electromagnetic field (near field) using a pair of resonators (for example, a pair of resonant coils) having the same natural frequency. This resonance-type power transmission receives much attention because it also allows transmission of large power of several kW for a relatively longer distance (for example, several meters).

CITATION LIST

PATENT DOCUMENT

PTD 1: Japanese Patent Laying-Open No. 2000-92727
PTD 2: Japanese Patent Laying-Open No. 2010-246348
PTD 3: Japanese Patent Laying-Open No. 2009-106136
PTD 4: Japanese Patent Laying-Open No. 2010-183812
PTD 5: Japanese Patent Laying-Open No. 2010-183813

SUMMARY OF INVENTION

TECHNICAL PROBLEM

In order to efficiently implement contactless power transfer, it is necessary to carry out positional alignment between a power transmission unit of a power transmission device and a power reception unit of a power reception device. Particularly when contactless power transmission is applied for feeding electric power to a vehicle, the position of the power reception unit mounted in the vehicle is different depending on the vehicle, and the positional relation between the power transmission unit and the power reception unit varies also depending on the position where the vehicle is stopped with respect to the power transmission device. Such a problem and a solution therefor are not discussed in the above-mentioned PTD 1.

Therefore, an object of the present invention is to provide a power transfer system for transferring electric power from a power transmission device to a power reception device in a contactless manner, for the purpose of providing a technique for implementing positional alignment between a power transmission unit of the power transmission device and a power reception unit of the power reception device.

SOLUTION TO PROBLEM

According to the present invention, a power transmission device serves to output electric power to a power reception device in a contactless manner, and includes a first coil, a plurality of second coils and a movement device. The first coil transmits electric power to the power reception device in a contactless manner. Each of the plurality of second coils serves to supply electric power to the first coil in a contactless manner, the electric power being received from a power supply. The movement device moves the first coil relative to the plurality of second coils.

Preferably, the plurality of second coils are formed of one conductive wire.

Preferably, the power transmission device further includes a switching unit. The switching unit is provided between the plurality of second coils and the power supply, electrically connects, to the power supply, a coil of the plurality of second coils that is closest to the first coil, and electrically disconnects at least one remaining coil of the plurality of second coils from the power supply.

Further preferably, the power transmission device further includes a switching unit. The switching unit is provided between the plurality of second coils and the power supply, electrically connects, to the power supply, a coil of the plurality of second coils that achieves optimum efficiency of power transmission to the power reception device, and electrically disconnects at least one remaining coil of the plurality of second coils from the power supply.

Preferably, the power reception device is mounted in a vehicle. The plurality of second coils are arranged in a vehicle front-rear direction in a parking space of the vehicle.

Preferably, a difference between a natural frequency of the first coil and a natural frequency of a power receiving coil of the power reception device is equal to or less than ±10% of the natural frequency of the first coil or the natural frequency of the power receiving coil.

Preferably, a coupling coefficient between the first coil and a power receiving coil is equal to or less than 0.1.

Preferably, the first coil transmits electric power to a power receiving coil through at least one of a magnetic field formed between the first coil and the power receiving coil and oscillating at a specific frequency, and an electric field formed between the first coil and the power receiving coil and oscillating at a specific frequency.

According to the present invention, a power reception device serves to receive electric power from a power transmission device in a contactless manner, and includes a first coil, a plurality of second coils and a movement device. The first coil receives electric power from the power transmission device in a contactless manner. Each of the plurality of second coils serves to extract electric power from the first coil in a contactless manner and output the electric power to an electric load. The movement device moves the first coil relative to the plurality of second coils.

Preferably, the plurality of second coils are formed of one conductive wire.

Preferably, the power reception device further includes a switching unit. The switching unit is provided between the plurality of second coils and the electric load, electrically connects, to the electric load, a coil of the plurality of second coils that is closest to the first coil, and electrically disconnects at least one remaining coil of the plurality of second coils from the electric load.

Further preferably, the power reception device further includes a switching unit. The switching unit is provided between the plurality of second coils and the electric load, electrically connects, to the electric load, a coil of the plurality of second coils that achieves optimum efficiency of power reception from the power transmission device, and electrically disconnects at least one remaining coil of the plurality of second coils from the electric load.

Preferably, the power reception device is mounted in a vehicle. The plurality of second coils are arranged in a front-rear direction of the vehicle.

Preferably, a difference between a natural frequency of the first coil and a natural frequency of a power transmitting coil is equal to or less than ±10% of the natural frequency of the first coil or the natural frequency of the power transmitting coil.

Preferably, a coupling coefficient between the first coil and a power transmitting coil is equal to or less than 0.1.

Preferably, the first coil receives electric power from a power transmitting coil through at least one of a magnetic field formed between the first coil and the power transmitting coil and oscillating at a specific frequency, and an electric field formed between the first coil and the power transmitting coil and oscillating at a specific frequency.

According to the present invention, a power transfer system serves to transfer electric power from a power transmission device to a power reception device in a contactless manner. The power transmission device includes a first coil, a plurality of second coils and moving means. The first coil transmits electric power to the power reception device in a contactless manner. Each of the plurality of second coils serves to supply electric power to the first coil in a contactless manner, the electric power being received from a power supply. The moving means moves the first coil based on a positional relation between the power reception device and the first coil in a range in which electric power can be supplied from one of the plurality of second coils to the first coil. The power reception device includes a power reception unit and an electric load. The power reception unit receives, in a contactless manner, electric power output from the first coil. The electric load receives the electric power received by the power reception unit.

According to the present invention, a power transfer system serves to transfer electric power from a power transmission device to a power reception device in a contactless manner. The power transmission device includes a power supply and a power transmission unit. The power transmission unit outputs electric power to the power reception device in a contactless manner, the electric power being supplied from the power supply. The power reception device includes a first coil, a plurality of second coils and moving means. The first coil receives electric power from the power transmission unit in a contactless manner. Each of the plurality of second coils serves to extract electric power from the first coil in a contactless manner and output the electric power to an electric load. The moving means moves the first coil based on a positional relation between the power transmission unit and the first coil in a range in which one of the plurality of second coils can extract electric power from the first coil in a contactless manner.

ADVANTAGEOUS EFFECTS OF INVENTION

According to the present invention, since only the first coil not requiring wiring to the power supply is moved, deterioration of the power cable resulting from movement does not occur.

BRIEF DESCRIPTION OF DRAWINGS

Fig. 1 is an entire configuration diagram of a power transfer system according to the first embodiment of the present invention.
Fig. 2 is a plan view of a power transmission unit shown in Fig. 1 as seen from the side on which electric power is transmitted.
Fig. 3 is a plan view of a power reception unit shown in Fig. 1 as seen from the side on which electric power is received.
Fig. 4 is a diagram showing a simulation model of the power transfer system.
Fig. 5 is a diagram showing the relation between the power transfer efficiency and the difference of natural frequencies between the power transmission unit and the power reception unit.
Fig. 6 is an equivalent circuit diagram at the time when electric power is transferred from a power transmission device to a vehicle.
Fig. 7 is a diagram showing the relation between a distance from a current source (magnetic current source) and the intensity of an electromagnetic field.
Fig. 8 is a diagram showing a change of an S11 parameter at the time when a resonant coil is moved in the power transmission unit.
Fig. 9 is a plan view of a power transmission unit according to the second embodiment as seen from the direction in which electric power is transmitted.
Fig. 10 is a plan view of a power transmission unit according to the third embodiment as seen from the direction in which electric power is transmitted.

DESCRIPTION OF EMBODIMENTS

Embodiments of the present invention will be hereinafter described in detail with reference to the drawings, in which the same or corresponding components are designated by the same reference characters, and description thereof will not be repeated.

[First Embodiment]

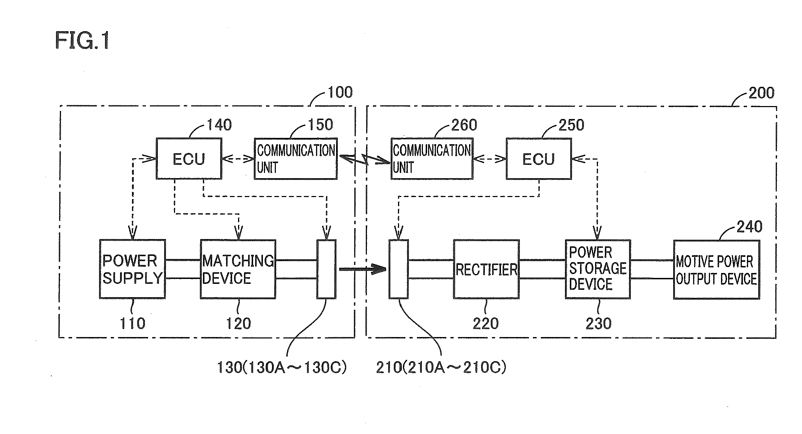

Fig. 1 is an entire configuration diagram of a power transfer system according to the first embodiment of the present invention. Referring to Fig. 1, this power transfer system includes a power transmission device 100 and a vehicle 200 as a power reception device.

Power transmission device 100 includes a power supply unit 110, a matching device 120, a power transmission unit 130, an electronic control unit (which will be hereinafter referred to as an "ECU ") 140, and a communication unit 150. Power supply unit 110 generates alternating-current (AC) power having a prescribed frequency. By way of example, power supply unit 110 receives electric power from a system power supply that is not shown to generate high-frequency AC power. Then, according to a command from ECU 140, power supply unit 110 controls electric power generation and discontinuation thereof, and the output electric power.

Matching device 120 is provided between power supply unit 110 and power transmission unit 130, and configured to be capable of changing its internal impedance. By way of example, matching device 120 is formed of a variable capacitor and a coil, and can change the impedance by changing the capacitance of the variable capacitor. By adjusting the impedance in this matching device 120, the impedance of power transmission device 100 can be matched to the impedance of vehicle 200 (impedance matching).

Power transmission unit 130 receives supply of high-frequency AC power from power supply unit 110. Then, power transmission unit 130 outputs electric power to power reception unit 210 of vehicle 200 in a contactless manner through the electromagnetic field generated around power transmission unit 130. In this case, power transmission unit 130 is provided with moving means for performing, according to a command from ECU 140, positional alignment between a resonant coil for power transmission included in power transmission unit 130 and a resonant coil for power reception included in power reception unit 210 of vehicle 200. Detailed description will be later given with regard to a specific configuration of power transmission unit 130 including the moving means, and power transfer from power transmission unit 130 to power reception unit 210.

ECU 140 controls power supply unit 110, matching device 120 and power transmission unit 130 by software processing by the CPU (Central Processing Unit) executing the program stored in advance and/or by hardware processing by a dedicated electronic circuit. Specifically, ECU 140 generates commands to start and stop an operation of power supply unit 110, and a power command value showing a target value of the output power of power supply unit 110, and outputs the commands and value to power supply unit 110. Furthermore, ECU 140 controls matching device 120 to match the impedance of power transmission device 100 to the impedance of vehicle 200. Furthermore, ECU 140 generates a command for controlling the above-mentioned moving means (described later) provided in power transmission unit 130, and outputs the command to power transmission unit 130. Communication unit 150 serves as a communication interface for power transmission device 100 to communicate with vehicle 200.

Vehicle 200 includes a power reception unit 210, a rectifier 220, a power storage device 230, a motive power output device 240, an ECU 250, and a communication unit 260. Power reception unit 210 receives high-frequency AC power, which is output from power transmission unit 130, through an electromagnetic field in a contactless manner. A specific configuration of power reception unit 210 will also be described later. Rectifier 220 rectifies the AC power received by power reception unit 210 and outputs the rectified AC power to power storage device 230.

Power storage device 230 is a rechargeable DC power supply and is configured of a secondary battery such as a lithium-ion battery or a nickel-metal hydride battery, for example. Power storage device 230 stores electric power supplied from rectifier 220 and also stores regenerative electric power generated by motive power output device 240. Then, power storage device 230 supplies the stored electric power to motive power output device 240. It is to be noted that a large capacity capacitor can also be employed as power storage device 230.

Motive power output device 240 generates driving power for running of vehicle 200 using the electric power stored in power storage device 230. Although not particularly shown, motive power output device 240 includes an inverter receiving electric power from power storage device 230, a motor driven by the inverter, driving wheels driven by the motor, and the like. In addition, motive power output device 240 may also include a power generator for charging power storage device 230 and an engine capable of driving the power generator.

ECU 250 carries out various controls in vehicle 200 by software processing by the CPU executing the program stored in advance and/or by hardware processing by a dedicated electronic circuit. Communication unit 260 serves as a communication interface for vehicle 200 to communicate with power transmission device 100.

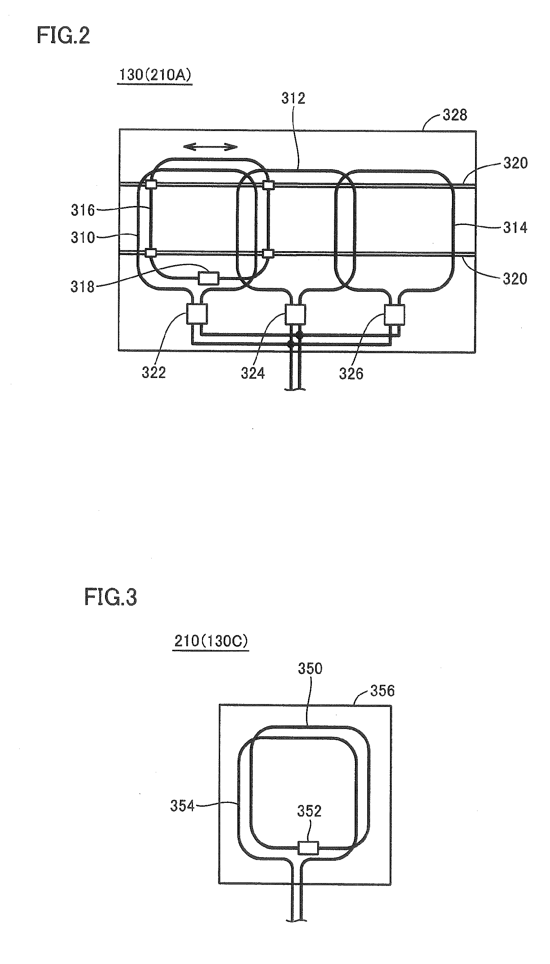

Fig. 2 is a plan view of power transmission unit 130 shown in Fig. 1 as seen from the side on which electric power is transmitted. Referring to Fig. 2, power transmission unit 130 includes electromagnetic induction coils 310, 312, 314, a resonant coil 316, a capacitor 318, a rail 320, relays 322, 324, 326, and a shield box 328.

Electromagnetic induction coils 310, 312 and 314 are fixedly disposed within shield box 328. By way of example, electromagnetic induction coils 310, 312 and 314 are arranged in the vehicle front-rear direction in the parking space of vehicle 200. The degree of overlap between adjacent electromagnetic induction coils (including the case where these adjacent coils do not overlap with each other) is designed as appropriate based on the arrangement space and the power transmission efficiency that varies depending on the degree of overlap between the adjacent coils.

Electromagnetic induction coils 310, 312 and 314 are connected to power supply unit 110 (not shown) through relays 322, 324 and 326, respectively. Relays 322, 324 and 326 are controlled by ECU 140 (Fig. 1). Also, depending on the position of movable resonant coil 316, the relay corresponding to an electromagnetic induction coil of electromagnetic induction coils 310, 312 and 314 that achieves the optimum efficiency of power transmission to vehicle 200 is turned on while remaining relays are turned off. By way of example, the relay corresponding to an electromagnetic induction coil of electromagnetic induction coils 310, 312 and 314 that is closest to resonant coil 316 is turned on while remaining relays are turned off. It is to be noted that the number of relays to be turned on does not have to be one, but a plurality of relays may be turned on depending on the position of resonant coil 316. Three pairs of power lines connected to relays 322, 324 and 326, respectively, are connected to one another within shield box 328, collected into one power line, and routed to the outside of shield box 328.

Resonant coil 316 is disposed at a prescribed distance from electromagnetic induction coils 310, 312 and 314, and configured to be movable within shield box 328 in a range in which it can receive electric power from any one of electromagnetic induction coils 310, 312 and 314. By way of example, rail 320 is disposed in the direction in which electromagnetic induction coils 310, 312 and 314 are arranged, and resonant coil 316 moves on rail 320, thereby allowing resonant coil 316 to move in accordance with the positional relation between power reception unit 210 of vehicle 200 and resonant coil 316.

Although Fig. 2 illustrates the state where resonant coil 316 is disposed at a position so as to face electromagnetic induction coil 310, the figure shows that the position of resonant coil 316 is slightly displaced from electromagnetic induction coil 310 for the convenience of illustration.

Resonant coil 316 forms an LC resonance circuit together with capacitor 318. In addition, an LC resonance circuit is formed also in power reception unit 210 of vehicle 200, as described later. Also, the difference between the natural frequency of the LC resonance circuit formed of resonant coil 316 and capacitor 318, and the natural frequency of the LC resonance circuit of power reception unit 210 is equal to or less than $\pm 10\%$ of the natural frequency of the former circuit or the natural frequency of the latter circuit. Capacitor 318 is provided for adjusting the natural frequency of the resonance circuit. Thus, capacitor 318 does not have to be provided in the case where a desired natural frequency can be obtained utilizing the stray capacitance of resonant coil 316.

Rail 320 is moving means for moving resonant coil 316 in accordance with the positional relation between power reception unit 210 of vehicle 200 and resonant coil 316, in order to implement excellent efficiency of power transmission from resonant coil 316 to power reception unit 210 (not shown) of vehicle 200. Rail 320 is disposed such that resonant coil 316 can be moved in a range in which electric power can be supplied from any one of electromagnetic induction coils 310, 312 and 314 to resonant coil 316. By way of example, rail 320 is disposed in the direction in which electromagnetic induction coils 310, 312 and 314 are arranged, and resonant coil 316 is attached to rail 320 such that resonant coil 316 can move on rail 320.

Shield box 328 is a box for preventing leakage of an electromagnetic wave to the outside, and, for example, may be formed of copper or formed of an inexpensive member having an inner surface or an outer surface onto which cloth, a sponge or the like having an electromagnetic wave shielding effect may be attached.

In this power transmission unit 130, resonant coil 316 is movable in the range in which resonant coil 316 can receive electric power from any one of electromagnetic induction coils 310, 312 and 314. Hereinafter representatively described will be the case where resonant coil 316 is located at the position corresponding to electromagnetic induction coil 310. Specifically, relay 322 corresponding to electromagnetic induction coil 310 is turned on while remaining relays 324 and 326 are turned off. Then, when high-frequency AC power is supplied from power supply unit 110 to electromagnetic induction coil 310, electromagnetic induction coil 310 is magnetically coupled to resonant coil 316 and supplies the high-frequency electric power received from power supply unit 110 to resonant coil 316 by means of electromagnetic induction. When resonant coil 316 receives high-frequency electric power from electromagnetic induction coil 310, it forms an electromagnetic field (near field) therearound and outputs electric power to the resonant coil (not shown) of power reception unit 210 in vehicle 200 in a contactless manner.

Resonant coil 316 is disposed at the position corresponding to a coil selected from electromagnetic induction coils 310, 312 and 314 in accordance with a prescribed indicator. By way of example, such an electromagnetic induction coil is selected as causing the S11 parameter to be minimum when resonant coil 316 is located to face this electromagnetic induction coil, and then, resonant coil 316 is disposed at a position so as to face this selected electromagnetic induction coil. It is to be noted that the S11 parameter is a reflection coefficient at an input port (an input of power transmission unit 130) of a circuit network formed of power transmission unit 130 and power reception unit 210 of vehicle 200, and can be readily detected by a commercially available network analyzer. In addition, in place of S11 parameter, an S21 parameter showing the pass characteristic of the above-mentioned circuit network, reflected power to power supply unit 110, the power receiving state in vehicle 200 (received electric power and a voltage of the received electric power), and the like may be used to select one of electromagnetic induction coils 310, 312 and 314.

Although Fig. 2 shows electromagnetic induction coils 310, 312 and 314 and resonant coil 316 each formed in a square shape, the shape of each coil is not limited to the shape shown in the figure, but may be a circular shape, for example. Furthermore, each coil is formed in one loop in Fig. 2, but may be formed in a plurality of loops.

Fig. 3 is a plan view of power reception unit 210 shown in Fig. 1 as seen from the side on which electric power is received. Referring to Fig. 3, power reception unit 210 includes a resonant coil 350, a capacitor 352, an electromagnetic induction coil 354, and a shield box 356.

Resonant coil 350 is fixedly disposed within shield box 356. Resonant coil 350 forms an LC resonance circuit together with capacitor 352. In addition, an LC resonance circuit is formed also in power transmission unit 130 of power transmission device 100, as described above. The difference between the natural frequency of the LC resonance circuit formed by resonant coil 350 and capacitor 352, and the natural frequency of the LC resonance circuit of power transmission unit 130 is equal to or less than ±10% of the natural frequency of the former circuit or the natural frequency of the latter circuit. Furthermore, capacitor 352 is provided for adjusting the natural frequency of the resonance circuit. Thus, capacitor 352 does not have to be provided when a desired natural frequency is obtained utilizing the stray capacitance of resonant coil 350.

Electromagnetic induction coil 354 is fixedly disposed within shield box 356 so as to be located to face resonant coil 350. Also in Fig. 3, the position of electromagnetic induction coil 354 is slightly displaced from resonant coil 350 for the convenience of illustration.

In this power reception unit 210, resonant coil 350 receives electric power from resonant coil 316 of power transmission unit 130 of power transmission device 100 through an electromagnetic field (near field) in a contactless manner. Electromagnetic induction coil 354 magnetically couples to resonant coil 350 by means of electromagnetic induction, extracts the AC power received by resonant coil 350 from resonant coil 350 by means of electromagnetic induction, and outputs the extracted power to rectifier 220 (Fig. 1).

Although Fig. 3 also shows resonant coil 350 and electromagnetic induction coil 354 each formed in a square shape, the shape of each coil is not limited to the shape shown in the figure, but may be a circular shape, for example. Furthermore, each coil is formed in one loop in Fig. 3, but may be formed in a plurality of loops.

Then, power transfer from power transmission device 100 to vehicle 200 will be hereinafter described. In this power transfer system, the difference between the natural frequency of power transmission unit 130 and the natural frequency of power reception unit 210 is equal to or less than ±10% of the natural frequency of power transmission unit 130 or the natural frequency of power reception unit 210. By setting the natural frequencies of power transmission unit 130 and power reception unit 210 so as to fall within such a range, the power transfer efficiency can be improved. On the other hand, when the above-mentioned difference between the natural frequencies is greater than ±10%, the power transfer efficiency becomes lower than 10%, which may cause a harmful effect such as lengthened power transfer time.

It is to be noted that the natural frequency of power transmission unit 130 (power reception unit 210) means an oscillation frequency in the case where an electric circuit (a resonance circuit) forming power transmission unit 130 (power reception unit 210) freely oscillates. Also, the resonance frequency of power transmission unit 130 (power reception unit 210) means a natural frequency at the time when the braking force or the electrical resistance is set at zero in the electric circuit (resonance circuit) forming power transmission unit 130 (power reception unit 210).

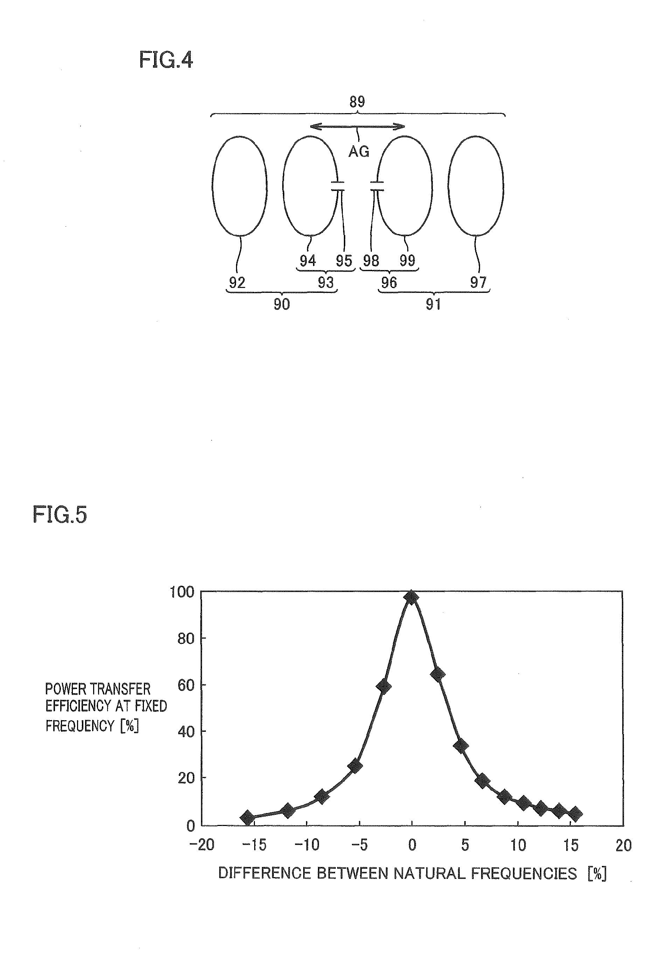

Referring to Figs. 4 and 5, the simulation results of analyzing the relation between the power transfer efficiency and the difference between natural frequencies. Fig. 4 is a diagram showing the simulation model of the power transfer system. Fig. 5 is a diagram showing the relation between the power transfer efficiency and the difference of natural frequencies between the power transmission unit and the power reception unit.

Referring to Fig. 4, a power transfer system 89 includes a power transmission unit 90 and a power reception unit 91. Power transmission unit 90 includes a first coil 92 and a second coil 93. Second coil 93 includes a resonant coil 94 and a capacitor 95 provided in resonant coil 94. Power reception unit 91 includes a third coil 96 and a fourth coil 97. Third coil 96 includes a resonant coil 99 and a capacitor 98 connected to this resonant coil 99.

The inductance of resonant coil 94 is defined as an inductance Lt while the capacitance of capacitor 95 is defined as a capacitance C1. Furthermore, the inductance of resonant coil 99 is defined as an inductance Lr while the capacitance of capacitor 98 is defined as a capacitance C2. When each parameter is set in this way, a natural frequency f1 of second coil 93 is as represented by the following equation (1), and a natural frequency f2 of third coil 96 is as represented by the following equation (2).

$$f1 = 1/\{2\pi \, (Lt \times C1)^{1/2}\} \, ... \, (1)$$

$$f2 = 1/\{2\pi \, (Lr \times C2)^{1/2}\} \, ... \, (2)$$

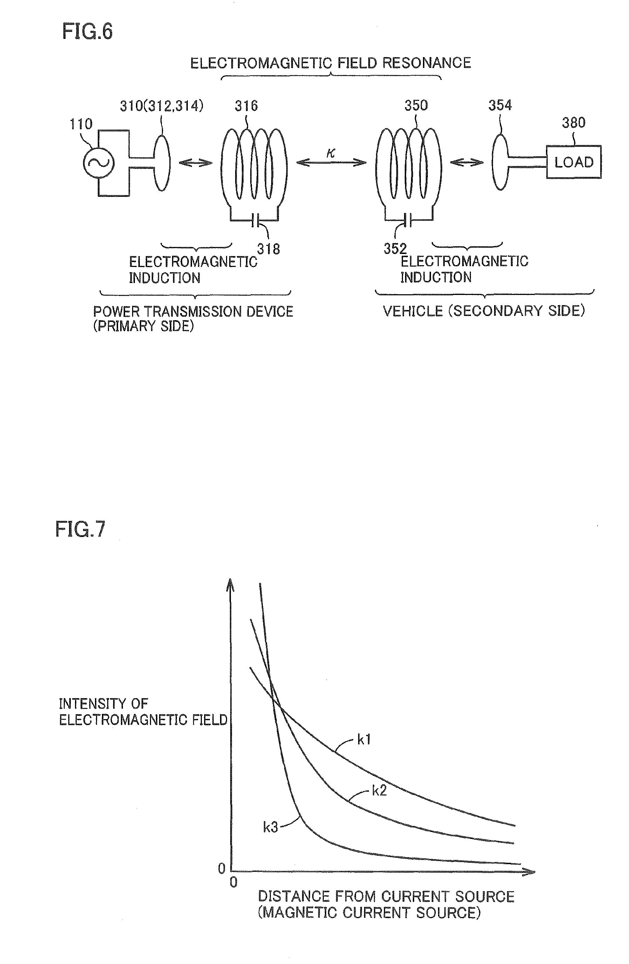

Fig. 6 shows the relation between the power transfer efficiency and the difference of natural frequencies between second coil 93 and third coil 96, in the case where inductance Lr and capacitances C1 and C2 are fixed while only inductance Lt is changed. In this simulation, the relative positional relation between resonant coil 94 and resonant coil 99 is fixed, and the frequency of the current supplied to second coil 93 is constant.

In the graph shown in Fig. 5, the horizontal axis shows the difference between natural frequencies (%) while the vertical axis shows the power transfer efficiency at a fixed frequency (%). The difference between natural frequencies (%) is represented by the following equation (3).

$$\text{(Difference between natural frequencies)} = \{(f1 - f2)/f2\} \times 100 \; (\%) \; ... \; (3)$$

As can be apparent also from Fig. 5, when the difference between natural frequencies (%) is 0%, the power transfer efficiency reaches near 100%. When the difference between natural frequencies (%) is $\pm5\%$, the power transfer efficiency is approximately 40%. When the difference between natural frequencies (%) is $\pm10\%$, the power transfer efficiency is approximately 10%. When the difference between natural frequencies (%) is $\pm15\%$, the power transfer efficiency is approximately 5%. In other words, it can be found that the power transfer efficiency can be improved to a practical level by setting the natural frequencies of second coil 93 and third coil 96 such that the absolute value of the difference between natural frequencies (%) (the difference between natural frequencies) falls within a range equal to or less than 10% of the natural frequency of third coil 96. Furthermore, it is more preferable that the natural frequencies of second coil 93 and third coil 96 are set such that the absolute value of the difference between natural frequencies (%) is equal to or less than 5% of the natural frequency of third coil 96 since this allows further improvement in power transfer efficiency. It is to be noted that electromagnetic field analysis software (JMAG (registered trademark): manufactured by JSOL Corporation) is employed as simulation software.

Again referring to Fig. 1, power transmission unit 130 and power reception unit 210 transmit and receive electric power to and from each other in a contactless manner through at least one of a magnetic field formed between power transmission unit 130 and power reception unit 210 and oscillating at a specific frequency, and an electric field formed between power transmission unit 130 and power reception unit 210 and oscillating at a specific frequency. A coupling coefficient κ between power transmission unit 130 and power reception unit 210 is equal to or less than 0.1. Thus, when power transmission unit 130 and power reception unit 210 are resonated by the electromagnetic field, electric power is transferred from power transmission unit 130 to power reception unit 210.

As described above, in this power transfer system, power transmission unit 130 and power reception unit 210 are resonated by an electromagnetic field, thereby transferring electric power between power transmission unit 130 and power reception unit 210 in a contactless manner. Such coupling between power transmission unit 130 and power reception unit 210 during power transfer is for example referred to as "magnetic resonance coupling", "magnetic field resonance coupling", "electromagnetic field resonance coupling", "electric field resonance coupling", and the like. "Electromagnetic field resonance coupling" means coupling including each of "magnetic resonance coupling" "magnetic field resonance coupling" and "electric field resonance coupling".

When power transmission unit 130 and power reception unit 210 each are formed of a coil as described above, power transmission unit 130 and power reception unit 210 are coupled mainly by a magnetic field, to form "magnetic resonance coupling" or "magnetic field resonance coupling". In addition, for example, an antenna such as a meander line can also be employed for power transmission unit 130 and power reception unit 210, in which case power transmission unit 130 and power reception unit 210 are coupled mainly by an electric field to form "electric field resonance coupling".

Fig. 6 is an equivalent circuit diagram at the time when electric power is transferred from power transmission device 100 to vehicle 200. Referring to Fig. 6, in power transmission device 100, resonant coil 316 forms an LC resonance circuit together with capacitor 318. Also in vehicle 200, resonant coil 350 forms an LC resonance circuit together with capacitor 352. The difference between the natural frequency of the LC resonance circuit formed of resonant coil 316 and capacitor 318, and the natural frequency of the LC resonance circuit formed of resonant coil 350 and capacitor 352 is equal to or less than $\pm10\%$ of the natural frequency of the former circuit or the natural frequency of the latter circuit.

In power transmission device 100, high-frequency AC power is supplied from power supply unit 110 to selected electromagnetic induction coil 310 (or 312, 314), and electric power is supplied to resonant coil 316 using electromagnetic induction coil 310 (or 312, 314). This causes energy (electric power) to move from resonant coil 316 to resonant coil 350 through the magnetic field formed between resonant coil 316 and resonant coil 350 of vehicle 200. The energy (electric power) having moved to resonant coil 350 is extracted using electromagnetic induction coil 354, and transferred to electric load 380 connected subsequent to rectifier 220.

Fig. 7 is a diagram showing the relation between the distance from a current source (magnetic current source) and the intensity of the electromagnetic field. Referring to Fig. 7, the electromagnetic field includes three components. Curve k1 represents a component inversely proportional to a distance from a wave source, and is referred to as a "radiation electromagnetic field". Curve k2 represents a component inversely proportional to the square of a distance from the wave source, and is referred to as an "induction electromagnetic field". Curve k3 represents a component inversely proportional to the cube of a distance from the wave source, and is referred to as a "static electromagnetic field".

The "static electromagnetic field" is a region where the intensity of the electromagnetic wave sharply decreases in accordance with the distance from the wave source. The resonance method uses the near field (evanescent field) where this "static electromagnetic field" is dominant, to transfer energy (electric power). Specifically, in the near field where the "static electromagnetic field" is dominant, a pair of resonators (for example, a pair of resonant coils) having natural frequencies close to each other are resonated, thereby transferring energy (electric power) from one resonator (primary resonant coil) to the other resonator (secondary resonant coil). This "static electromagnetic field" does not propagate energy to a distant location. Therefore, as compared with an electromagnetic wave transferring energy (electric power) by the "radiation electromagnetic field" propagating energy to a distant location, the resonance method allows electric power transmission with a relatively small energy loss.

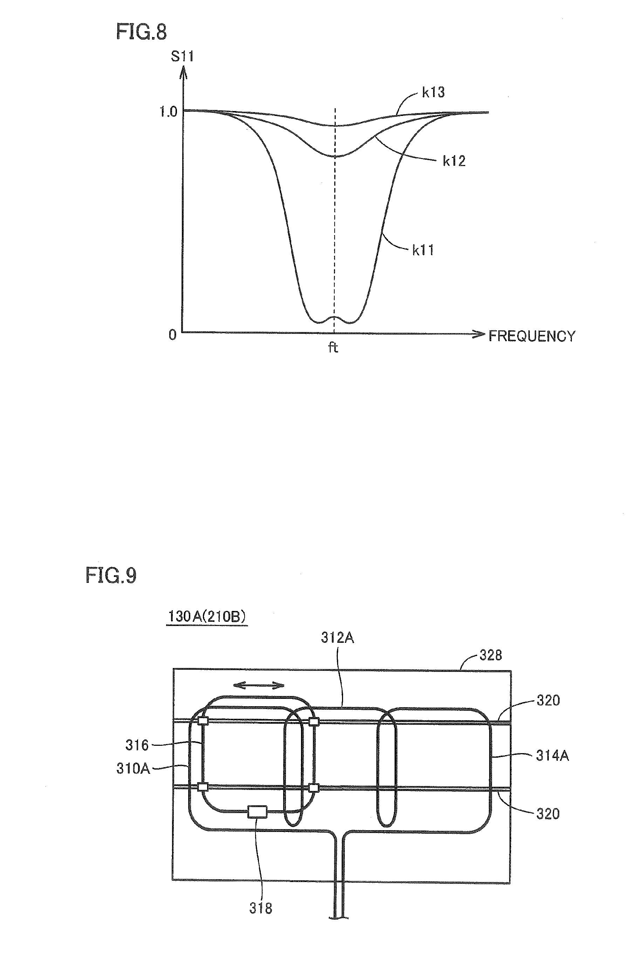

Fig. 8 is a diagram showing a change of the S 11 parameter at the time when resonant coil 316 is moved in power transmission unit 130. Referring to Fig. 8, the horizontal axis shows a frequency of transmission power while the vertical axis shows an S11 parameter. By way of example, curve k11 shows S11 parameter at the time when resonant coil 316 moves to the position where it faces electromagnetic induction coil 310, and curves k12 and k13 each show S11 parameter at the time when resonant coil 316 moves to the position where it faces electromagnetic induction coils 312 and 314, respectively. It is to be noted that a frequency ft represents a frequency of the AC power generated by power supply unit 110. In this case, electromagnetic induction coil 312 by which S11 parameter is at a minimum is selected.

Although power transmission unit 130 is configured to have three electromagnetic induction coils 310, 312 and 314 in the above description, the number of electromagnetic induction coils included in power transmission unit 130 is not limited to three, but may be two, or may be more than three. The shapes of the electromagnetic induction coil and the resonant coil do not have to be the same as described above. The sizes of the electromagnetic induction coil and the resonant coil also do not have to be the same.

As described above, in this first embodiment, a plurality of electromagnetic induction coils 310, 312 and 314 are provided in power transmission unit 130 of power transmission device 100. Furthermore, moving means (rail 320) is provided for moving resonant coil 316 based on the positional relation between vehicle 200 and resonant coil 316 of power transmission unit 130 in the range in which electric power can be supplied from any one of electromagnetic induction coils 310, 312 and 314 to resonant coil 316. Therefore, according to this first embodiment, since only resonant coil 316 not requiring wiring to power supply unit 110 is moved, deterioration of the power line (a power cable, and the like) resulting from movement does not occur. Furthermore, since resonant coil 316 can be moved, it becomes possible to implement power transfer in a relatively wide range without having to provide a plurality of resonant coils 316.

[Second Embodiment]

Although electromagnetic induction coils 310, 312 and 314 are formed of separate conductive wires in the first embodiment, a plurality of electromagnetic induction coils may be formed of one conductive wire.

The entire configuration of the power transfer system according to the second embodiment is the same as the configuration of the power transfer system according to the first embodiment shown in Fig. 1.

Fig. 9 is a plan view of a power transmission unit 130A in the second embodiment as seen from the direction in which electric power is transmitted. Referring to Fig. 9, power transmission unit 130A includes electromagnetic induction coils 310A, 312A and 314A, a resonant coil 316, a capacitor 318, a rail 320, and a shield box 328.

Electromagnetic induction coils 310A, 312A and 314A are basically disposed at the same positions as electromagnetic induction coils 310, 312 and 314, respectively, in the first embodiment and formed of one conductive wire. Accordingly, it becomes possible to reduce wiring for forming electromagnetic induction coils 310A, 312A and 314A, and also eliminate the need to provide relays 322, 324 and 326 (Fig. 2).

It is to be noted that other configurations of power transmission unit 130A are the same as those of power transmission unit 130 in the first embodiment. Although power transmission unit 130A is configured to have three electromagnetic induction coils 310A, 312A and 314A in the above description, the number of electromagnetic induction coils included in power transmission unit 130A is not limited to three, but may be two or may be more than three. The shapes of the electromagnetic induction coil and the resonant coil do not have to be the same. Also, the sizes of the electromagnetic induction coil and the resonant coil do not have to be the same.

As described above, according to the second embodiment, the same effects as those in the first embodiment can be achieved, and electromagnetic induction coils 310A, 312A and 314A are formed of one conductive wire. Accordingly, it becomes possible to reduce wiring for forming an electromagnetic induction coil, and also eliminate the need to provide relays 322, 324 and 326 (Fig. 2).

[Third Embodiment]

In the above-described first and second embodiments, a plurality of electromagnetic induction coils in each of power transmission units 130 and 130A are linearly arranged, and resonant coil 316 is also linearly movable. In this third embodiment, a plurality of electromagnetic induction coils are arranged in a two-dimensional manner, and the resonant coil is also configured to be movable in a two-dimensional manner.

The entire configuration of the power transfer system according to the third embodiment is the same as the configuration of the power transfer system according to the first embodiment shown in Fig. 1.

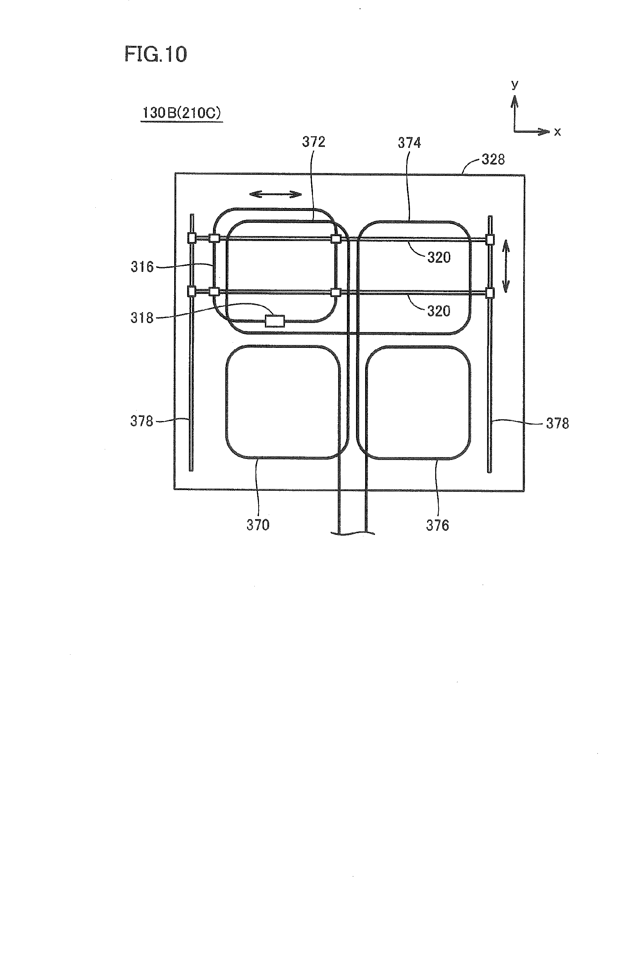

Fig. 10 is a plan view of a power transmission unit 130B in the third embodiment as seen from the direction in which electric power is transmitted. Referring to Fig. 10, power transmission unit 130B includes electromagnetic induction coils 370, 372, 374, and 376, a resonant coil 316, a capacitor 318, rails 320 and 378, and a shield box 328.

Electromagnetic induction coils 370, 372, 374, and 376 are fixedly disposed within shield box 328. Electromagnetic induction coils 370, 372, 374, and 376 are arranged in a two-dimensional manner, and by way of example, arranged in a matrix form. Electromagnetic induction coils 370, 372, 374, and 376 are formed of one conductive wire. In addition, electromagnetic induction coils 370, 372, 374, and 376 may be formed of separate conductive wires, and a relay may be provided between each of electromagnetic induction coils 370, 372, 374, and 376 and power supply unit 110 (Fig. 1).

Rails 320 and 378 each are moving means for moving resonant coil 316 in accordance with the positional relation between power reception unit 210 of vehicle 200 and resonant coil 316 in order to implement excellent efficiency of power transmission from resonant coil 316 to power reception unit 210 (not shown) of vehicle 200. Rails 320 and 378 are arranged so as to allow resonant coil 316 to move in the range in which electric power can be supplied from any one of electromagnetic induction coils 370, 372, 374, and 376 to resonant coil 316. By way of example, rail 320 is disposed in the x direction (for example, in the vehicle front-rear direction in a parking space), and resonant coil 316 is attached to rail 320 such that this resonant coil 316 can move on rail 320. Rail 378 is disposed in the y direction (for example, in the vehicle width direction in the parking space), and rail 320 is attached to rail 378 such that this rail 320 can move on rail 378.

Although power transmission unit 130B is configured to have four electromagnetic induction coils 370, 372, 374, and 376 in the above description, the number of electromagnetic induction coils included in power transmission unit 130B is not limited to four, but may be more than four. The shapes of the electromagnetic induction coil and the resonant coil do not have to be the same. The sizes of the electromagnetic induction coil and the resonant coil also do not have to be the same.

As described above, according to the third embodiment, the same effects as those in the first and second embodiments can be achieved, and positional alignment between the resonant coils can be carried out in a two-dimensional manner.

[Fourth Embodiment]

In the above-described first embodiment, the resonant coil is configured to be movable in power transmission unit 130 of power transmission device 100. In the fourth embodiment, the resonance circuit is configured to be movable in the power reception unit of vehicle 200.

The entire configuration of the power transfer system according to this fourth embodiment is the same as the configuration of the power transfer system shown in Fig. 1. Also, a power reception unit 210A of vehicle 200 has the same configuration as that of power transmission unit 130 shown in Fig. 2. On the other hand, a power transmission unit 130C of power transmission device 100 has the same configuration as that of power reception unit 210 shown in Fig. 3. In other words, in this fourth embodiment, the resonant coil is configured to be movable on the vehicle 200 side while the resonant coil is fixedly disposed on the power transmission device 100 side.

Also in this fourth embodiment, the number of electromagnetic induction coils included in power reception unit 210A is not limited to three, but may be two or may be more than three. The shapes of the electromagnetic induction coil and the resonant coil do not have to be the same as described above. The sizes of the electromagnetic induction coil and the resonant coil also do not have to be the same.

According to the fourth embodiment, the same effects as those in the first embodiment can be achieved.

[Fifth Embodiment]

Also in this fifth embodiment, the resonant coil is configured to be movable in the power reception unit of the vehicle, and a plurality of electromagnetic induction coils are formed of one conductive wire.

The entire configuration of the power transfer system according to this fifth embodiment is the same as the configuration of the power transfer system shown in Fig. 1. Also, power reception unit 210B of vehicle 200 has the same configuration as that of power transmission unit 130A shown in Fig. 9. On the other hand, power transmission unit 130C of power transmission device 100 has the same configuration as that of power reception unit 210 shown in Fig. 3. In other words, according to the fifth embodiment, on the vehicle 200 side, the resonant coil is configured to be movable and the electromagnetic induction coils are formed of one conductive wire. On the power transmission device 100 side, the resonant coil is fixedly disposed.

Also in this fifth embodiment, the number of electromagnetic induction coils included in power reception unit 210B is not limited to three, but may be two or may be more than three. The shapes of the electromagnetic induction coil and the resonant coil do not have to be the same as described above. The sizes of the electromagnetic induction coil and the resonant coil also do not have to be the same.

According to the fifth embodiment, the same effects as those in the second embodiment can be achieved.

[Sixth Embodiment]

In this sixth embodiment, in the power reception unit of the vehicle, a plurality of electromagnetic induction coils are arranged in a two-dimensional manner while the resonant coil is configured to be movable in a two-dimensional manner.

The entire configuration of the power transfer system according to this sixth embodiment is the same as the configuration of the power transfer system shown in Fig. 1. Also, a power reception unit 210C of vehicle 200 has the same configuration as that of power transmission unit 130B shown in Fig. 10. On the other hand, power transmission unit 130C of power transmission device 100 has the same configuration as that of power reception unit 210 shown in Fig. 3. In other words, according to this sixth embodiment, on the vehicle 200 side, a plurality of electromagnetic induction coils are arranged in a two-dimensional manner and the resonant coil is also configured to be movable in a two-dimensional manner. On the power transmission device 100 side, the resonant coil is fixedly disposed.

Also in this sixth embodiment, as additionally described in the third embodiment, electromagnetic induction coils may be formed of separate conductive wires, and a relay may be provided between each electromagnetic induction coil and rectifier 220 (Fig. 1). Although power reception unit 210C is configured to have four electromagnetic induction coils, the number of electromagnetic induction coils included in power reception unit 210C is not limited to four, but may be more than four. The shapes of the electromagnetic induction coil and the resonant coil do not have to be the same. The sizes of the electromagnetic induction coil and the resonant coil also do not have to be the same.

According to the sixth embodiment, the same effects as those in the third embodiment can be achieved.

[Seventh Embodiment]

In the first to third embodiments, the resonant coil is configured to be movable on the power transmission device side while the resonant coil is fixedly disposed on the vehicle side. On the other hand, in the fourth to sixth embodiments, the resonant coil is configured to be movable on the vehicle side while the resonant coil is fixedly disposed on the power transmission device side. In this seventh embodiment, the resonant coil is configured to be movable on both of the power transmission device side and the vehicle side.

The entire configuration of the power transfer system according to this seventh embodiment is the same as the configuration of the power transfer system shown in Fig. 1. Power transmission device 100 includes power transmission unit 130 shown in Fig. 2, and power reception unit 210A of vehicle 200 has the same configuration as that of power transmission unit 130. In other words, according to this seventh embodiment, the resonant coils are movable on both of the power transmission device 100 side and the vehicle 200 side.

In place of power transmission unit 130, the configurations of power transmission unit 130A shown in Fig. 9 and power transmission unit 130B shown in Fig. 10 may be employed. Furthermore, in place of power reception unit 210A, the configurations of power reception unit 210B shown in Fig. 9 and power reception unit 210C shown in Fig. 10 may be employed.

According to this seventh embodiment, positional alignment between the resonant coils can be carried out more flexibly.

In each of the above-described embodiments, the resonant coil is moved relative to a plurality of electromagnetic induction coils, but a plurality of resonant coils may be provided corresponding to the plurality of electromagnetic induction coils. Consequently, a wide range of power transfer can be implemented.

Furthermore, in each of the above-described embodiments, power transmission unit 130 (130A to 130C) of power transmission device 100 (on the primary side) and power reception unit 210 (210A to 210C) of vehicle 200 (on the secondary side) are resonated by an electromagnetic field, thereby transferring electric power from the power transmission unit to the power reception unit in a contactless manner. However, the present invention is applicable also to such a system as transferring electric power from the power transmission unit to the power reception unit in a contactless manner by means of electromagnetic induction. When power transfer is carried out between the power transmission unit and the power reception unit by means of electromagnetic induction, coupling coefficient $\kappa$ between the power transmission unit and the power reception unit becomes a value close to 1.0.

Furthermore, while each of the above-described embodiments shows the case where electric power is transferred from power transmission device 100 to vehicle 200, the present invention can be applied also to a power transfer system including a power reception device other than a vehicle.

In the above description, resonant coil 316 corresponds to an embodiment of the "first coil" in the present invention; and electromagnetic induction coils 310, 312 and 314, electromagnetic induction coils 310A, 312A and 314A, and electromagnetic induction coils 370, 372, 374, and 376 correspond to an embodiments of the "plurality of second coils" in the present invention. Furthermore, rail 320 and rail 378 each correspond to an embodiment of the "moving means" in the present invention; and relays 322, 324 and 326 each corresponds to an embodiment of the "switching unit" in the present invention.

It should be construed that embodiments disclosed herein are by way of illustration in all respects, not by way of limitation. The scope of the present invention is defined by the terms of the claims, rather than the description of the embodiments provided above, and is intended to include any modifications within the meaning and scope equivalent to the terms of the claims.

REFERENCE SIGNS LIST

100 power transmission device, 110 power supply unit, 120 matching device, 130, 130A to 130C power transmission unit, 140, 250 ECU, 150, 260 communication unit, 200 vehicle, 210, 210A to 210C power reception unit, 220 rectifier, 230 power storage device, 240 motive power output device, 310, 312, 314, 310A, 312A, 314A, 354, 370, 372, 374, 376 electromagnetic induction coil, 316, 350 resonant coil, 318, 352 capacitor, 320, 378 rail, 322, 324, 326 relay, 328, 356 shield box, 380 electric load.

**Claims**

1. A power transmission device outputting electric power to a power reception device (200) in a contactless manner, said power transmission device comprising:

   a first coil (316) for transmitting electric power to said power reception device in a contactless manner;
   a plurality of second coils (310, 312, 314; 310A, 312A, 314A; 370, 372, 374, 376) each for supplying electric power to said first coil in a contactless manner, said electric power being received from a power supply; and
   a movement device (320, 378) for moving said first coil relative to said plurality of second coils.

2. The power transmission device according to claim 1, wherein said plurality of second coils are formed of one conductive wire.

3. The power transmission device according to claim 1, further comprising a switching unit (322, 324, 326) provided between said plurality of second coils and said power supply, electrically connecting, to said power supply, a coil of said plurality of second coils that is closest to said first coil, and electrically disconnecting at least one remaining coil of said plurality of second coils from said power supply.

4. The power transmission device according to claim 1, further comprising a switching unit (322, 324, 326) provided between said plurality of second coils and said power supply, electrically connecting, to said power supply, a coil of said plurality of second coils that achieves optimum efficiency of power transmission to said power reception device, and electrically disconnecting at least one remaining coil of said plurality of second coils from said power supply.

5. The power transmission device according to claim 1, wherein
   said power reception device is mounted in a vehicle, and
   said plurality of second coils are arranged in a vehicle front-rear direction in a parking space of said vehicle.

6. The power transmission device according to claim 1, wherein a difference between a natural frequency of said first coil and a natural frequency of a power receiving coil of said power reception device is equal to or less than $\pm 10\%$ of the natural frequency of said first coil or the natural frequency of said power receiving coil.

7. The power transmission device according to claim 1, wherein a coupling coefficient between said first coil and a power receiving coil of said power reception device is equal to or less than 0.1.

8. The power transmission device according to claim 1, wherein said first coil transmits electric power to a power receiving coil of said power reception device through at least one of a magnetic field formed between said first coil and said power receiving coil and oscillating at a specific frequency, and an electric field formed between said first coil and said power receiving coil and oscillating at a specific frequency.

9. A power reception device receiving electric power from a power transmission device (100) in a contactless manner, said power reception device comprising:

   a first coil (316) for receiving electric power from said power transmission device in a contactless manner;

a plurality of second coils (310, 312, 314; 310A, 312A, 314A; 370, 372, 374, 376) each for extracting electric power from said first coil in a contactless manner and outputting the electric power to an electric load; and a movement device (320, 378) for moving said first coil relative to said plurality of second coils.

10. The power reception device according to claim 9, wherein said plurality of second coils are formed of one conductive wire.

11. The power reception device according to claim 9, further comprising a switching unit (322, 324, 326) provided between said plurality of second coils and said electric load, electrically connecting, to said electric load, a coil of said plurality of second coils that is closest to said first coil, and electrically disconnecting at least one remaining coil of said plurality of second coils from said electric load.

12. The power reception device according to claim 9, further comprising a switching unit (322, 324, 326) provided between said plurality of second coils and said electric load, electrically connecting, to said electric load, a coil of said plurality of second coils that achieves optimum efficiency of power reception from said power transmission device, and electrically disconnecting at least one remaining coil of said plurality of second coils from said electric load.

13. The power reception device according to claim 9, wherein
said power reception device is mounted in a vehicle, and
said plurality of second coils are arranged in a front-rear direction of said vehicle.

14. The power reception device according to claim 9, wherein a difference between a natural frequency of said first coil and a natural frequency of a power transmitting coil of said power transmission device is equal to or less than ±10% of the natural frequency of said first coil or the natural frequency of said power transmitting coil.

15. The power reception device according to claim 9, wherein a coupling coefficient between said first coil and a power transmitting coil of said power transmission device is equal to or less than 0.1.

16. The power reception device according to claim 9, wherein said first coil receives electric power from a power transmitting coil of said power transmission device through at least one of a magnetic field formed between said first coil and said power transmitting coil and oscillating at a specific frequency, and an electric field formed between said first coil and said power transmitting coil and oscillating at a specific frequency.

17. A power transfer system transferring electric power from a power transmission device (100) to a power reception device (200) in a contactless manner,
said power transmission device including
a first coil (316) for transmitting electric power to said power reception device in a contactless manner,
a plurality of second coils (310, 312, 314; 310A, 312A, 314A; 370, 372, 374, 376) each for supplying electric power to said first coil in a contactless manner, said electric power being received from a power supply, and
moving means (320, 378) for moving said first coil based on a positional relation between said power reception device and said first coil in a range in which electric power can be supplied from one of said plurality of second coils to said first coil, and
said power reception device including
a power reception unit (210, 210A to 210C) receiving, in a contactless manner, electric power output from said first coil, and
an electric load receiving the electric power received by said power reception unit.

18. A power transfer system transferring electric power from a power transmission device (100) to a power reception device (200) in a contactless manner,
said power transmission device including
a power supply (110), and
a power transmission unit (130, 130A to 130C) outputting electric power to said power reception device in a contactless manner, said electric power being supplied from said power supply, and
said power reception device including
a first coil (316) for receiving electric power from said power transmission unit in a contactless manner,
a plurality of second coils (310, 312, 314; 310A, 312A, 314A; 370, 372, 374, 376) each for extracting electric power from said first coil in a contactless manner and outputting the electric power to an electric load, and
moving means (320, 378) for moving said first coil based on a positional relation between said power transmission unit and said first coil in a range in which one of said plurality of second coils can extract electric power from said first coil in a contactless manner.

FIG.1

FIG.2

130(210A)

FIG.3

210(130C)

FIG.4

FIG.5

FIG.6

ELECTROMAGNETIC FIELD RESONANCE

310(312,314) 316 350 354

110 380

LOAD

κ

ELECTROMAGNETIC
INDUCTION
318

352 ELECTROMAGNETIC
INDUCTION

POWER TRANSMISSION DEVICE
(PRIMARY SIDE)

VEHICLE (SECONDARY SIDE)

FIG.7

INTENSITY OF
ELECTROMAGNETIC FIELD

k1

k2

k3

0

0

DISTANCE FROM CURRENT SOURCE
(MAGNETIC CURRENT SOURCE)

FIG.8

FIG.9

FIG.10

130B(210C)

**INTERNATIONAL SEARCH REPORT**

| International application No. |
| --- |
| PCT/JP2011/073378 |

A.  CLASSIFICATION OF SUBJECT MATTER
*H02J17/00*(2006.01)i, *H02J7/00*(2006.01)i

According to International Patent Classification (IPC) or to both national classification and IPC

B.  FIELDS SEARCHED

Minimum documentation searched (classification system followed by classification symbols)
H02J17/00, H02J7/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 2010-183812 A  (Toyota Industries Corp.), 19 August 2010 (19.08.2010), entire text; all drawings (Family: none) | 1-18 |
| Y | JP 2011-160505 A  (Sony Corp.), 18 August 2011 (18.08.2011), paragraphs [0047] to [0062]; fig. 13 to 19 & CN 102142708 A | 1-18 |
| A | JP 2011-147280 A  (Sony Corp.), 28 July 2011 (28.07.2011), paragraphs [0045] to [0047]; fig. 4 & US 2011/0175455 A1    & CN 102130511 A | 1-18 |

☒  Further documents are listed in the continuation of Box C.  ☐  See patent family annex.

| | |
| --- | --- |
| *     Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 08 June, 2012 (08.06.12) | 19 June, 2012 (19.06.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/073378 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2011-160515 A  (Autonetworks Technologies, Ltd.), 18 August 2011 (18.08.2011), entire text; all drawings (Family: none) | 1-18 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000092727 A
- JP 2010246348 A
- JP 2009106136 A
- JP 2010183812 A
- JP 2010183813 A